Europäisches Patentamt

European Patent Office

Office européen des brevets

(19)

(11) **EP 1 297 750 A1**

## (12) EUROPEAN PATENT APPLICATION
published in accordance with Art. 158(3) EPC

(43) Date of publication:
**02.04.2003 Bulletin 2003/14**

(51) Int Cl.⁷: **A23G 1/00**

(21) Application number: **01941255.0**

(22) Date of filing: **26.06.2001**

(86) International application number:
**PCT/JP01/05457**

(87) International publication number:
**WO 02/000032 (03.01.2002 Gazette 2002/01)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.06.2000 JP 2000192370**

(71) Applicant: **Meiji Seika Kaisha, Ltd.**
**Chuo-ku, Tokyo 104-0031 (JP)**

(72) Inventors:
• **TAKEUCHI, Shunsuke**
**c/o Food Research and DvptLabs**
**sakado-shi Saitama 350-0214 (JP)**

• **HIRATSUKA, Yuko**
**c/o Food Research and Dvlpt Labs**
**sakado-shi Saitama 350-0214 (JP)**
• **OKAYA, Eiji**
**c/o Food Research and Development Labs**
**Sa kado-shi Saitama 350-0214 (JP)**

(74) Representative: **VOSSIUS & PARTNER**
**Siebertstrasse 4**
**81675 München (DE)**

(54) **HOLLOW CAKES CONTAINING PUFFED CHOCOLATE AND PROCESS FOR PRODUCING THE SAME**

(57)    Relatively large-sized hollow confectionery containing an expanded chocolate and having a very light texture. Namely, a hollow confectionery having a space volume of up to 100 ml. The hollow confectionery containing an expanded chocolate, which are composed of a gas-entrapped chocolate mass comprising a diglycerin fatty acid ester or a mixed oil containing an edible fat and tri-saturated fatty acid glycerides containing behenic acid, BOB seeding material or crystalline powdered BOB, and hollow confectionery filled with the gas-entrapped chocolate mass, can be obtained by expanding the expanded chocolate mass in the hollow confectionery under reduced pressure and then cooling to give gas-entrapped chocolate having an apparent specific gravity of 0.14 to 0.30.

EP 1 297 750 A1

## Description

## TECHNICAL FIELD

The present invention relates to hollow confectionery containing an expanded chocolate and a process for manufacturing the same.

## BACKGROUND ART

Japanese Patent S48-62984(A) discloses processes for manufacturing bubble-containing confectionery and apparatus for manufacturing the same. The manufacturing processes employ one by which a tempered chocolate mass is stirred to introduce and disperse gas into the mass, followed by subjecting the mass to a reduced pressure and cooling, thereby expanding the gas within the chocolate mass and solidifying the mass.

Japanese Patent H4-19821(B) discloses gas-entrapped chocolate and processes for manufacturing the same. The manufacturing processes employ one by which a chocolate mass into which 0.1 to 1.0 % of polyglycerin ricinoleic acid ester condensates are mixed is cooled, while stirring the mass and allowing gas to be contained in the mass, to a temperature which is 8 to 14 °C lower than the melting point with its specific gravity being reduced to 1.0 or less, after which, expansion is carried out under a reduced pressure of 50 Torr or lower, followed by cooling and solidifying it, thereby making a gas-entrapped chocolate having an apparent specific gravity of not more than 0.3.

WO 00/57715 discloses a gas-entrapped chocolate obtained by adding a mixed oil of an edible oil or fat and tri-saturated fatty acid glycerides containing behenic acid, and processes for its manufacture.

In addition, in the past, processes have been known for manufacturing hollow confectionery filled with a chocolate mass obtained by preparing hollow confectionery made from grain flours and/or starch, and then injecting a fatty confectionery dough, such as a chocolate mass or creamy product, into the hollow portion in the above-described hollow confectionery with hollow needles (for example, Japanese Patent H6-209711(A)). In other words, a mixture of grain flours such as wheat flour, starch, seasonings, and water are cooked with steam to prepare a cooked dough, which in turn is placed into a mixer and stirred, thereby entrapping air into the dough. This air-entrapped, cooked dough is formed in the shape of sheets, two sheets are put together, followed by punching, and after drying the punched pieces, heated air treatment is performed to prepare expanded hollow confectionery. Then, a chocolate mass or creamy product is injected into the hollow portion of the expanded hollow confectionery with hollow needles having an inside diameter of 2 to 3 mm to manufacture hollow confectionery filled with a fatty confectionery.

In a case of injecting a gas-entrapped chocolate mass according to the conventional processes into the hollow portion of hollow confectionery with hollow needles, there are caused some problems as follows. It is necessary to increase the inside diameter of the needles for injection to a great extent, since the viscosity of the gas-entrapped chocolate mass as described above is increased extremely. As a result, the injection often causes some damages to the above-described hollow confectionery, when the gas-entrapped chocolate mass, resulting in reducing the yield as products. When conventional needles with small inside diameters are used, on the other hand, injection takes longer times, resulting in a significantly poor productivity.

## DISCLOSURE OF INVENTION

In the context of the present invention, the apparent specific gravity of an expanded chocolate means a value determined by the following equation:

$$\text{the apparent specific gravity of an expanded chocolate} =$$

$$[\text{gas-entrapped chocolate mass weight}] / [\text{expanded chocolate volume}]$$

wherein the gas-entrapped chocolate mass weight is a weight measured before expanding, and the expanded chocolate volume refers to a volume measured at the same pressure and temperature as those during expanding the gas-entrapped chocolate mass in a chamber. The specific gravity of a gas-entrapped chocolate mass refers to a value determined by the following equation:

$$\text{the specific gravity of a gas-entrapped chocolate mass} =$$

$$[\text{gas-entrapped chocolate mass weight}] / [\text{gas-entrapped chocolate mass volume}]$$

wherein the gas-entrapped chocolate volume is measured under normal pressure.

Hollow confectionery containing an expanded chocolate according to the present invention is characterized by comprising a gas-entrapped chocolate mass and hollow confectionery filled with the gas-entrapped chocolate mass, said mass containing 0.2 to 1.5 % by weight of a diglycerin fatty acid ester and 1 to 3 % by weight of BOB (1,3-dibehenoyl-2 -oleoylglycerol) seeding material (a mixture of an equal amount of crystalline powdered BOB and powdered sugar) or 0.5 to 1.5 % by weight of crystalline powdered BOB, and in that the expanded chocolate obtained by expanding and solidifying the gas-entrapped chocolate mass contained in the hollow confectionery has an apparent specific gravity adjusted in the range of 0.14 to 0.30, or alternatively characterized by comprising a gas-entrapped chocolate mass and hollow confectionery filled with the gas-entrapped chocolate mass, said mass containing a mixed oil of an edible oil or fat and tri-saturated fatty acid glycerides containing behenic acid and 1 to 3 % by weight of BOB seeding material or 0.5 to 1.5 % by weight of crystalline powdered BOB, and in that the expanded chocolate obtained by expanding and solidifying the gas-entrapped chocolate mass contained in the hollow confectionery has an apparent specific gravity adjusted in the range of 0.14 to 0.30.

In the present invention, the hollow confectionery containing an expanded chocolate as described above can be obtained separately by the following manufacturing processes, each comprising the following different steps:

[I] a process comprising the steps of:

(1) melting a chocolate mass containing 0.2 to 1.5 % by weight of a diglycerin fatty acid ester in a first temperature range which is 0 to 12 °C higher than the melting point of the oil or fat contained in the chocolate mass, and introducing and dispersing gas into the chocolate mass;

(2) thereafter, adding 1 to 3 % by weight of BOB seeding material or 0.5 to 1.5 % by weight of crystalline powdered BOB, while cooling the mass to a second temperature range which is 0 to 3 °C higher than the melting point of the fat contained in the mass or holding it in the second temperature range, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) melting a chocolate mass containing 0.2 to 1.5 % by weight of a diglycerin fatty acid ester in a first temperature range which is 0 to 12 °C higher than the melting point of the fat contained in the chocolate mass, and then cooling the mass to a second temperature range which is 0 to 3 °C higher than the melting point of the fat contained in the mass or holding it in the second temperature range;

(2) adding 1 to 3 % by weight of BOB seeding material or 0.5 to 1.5 % by weight of crystalline powdered BOB under the second temperature condition, followed by introducing and dispersing gas into the chocolate mass, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass within the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) melting a chocolate mass containing 0.2 to 1.5 % by weight of a diglycerin fatty acid ester in a first temperature range which is 0 to 12 °C higher than the melting point of the fat contained in the chocolate mass, and then cooling the mass to a second temperature range which is 0 to 3 °C higher than the melting point of the fat contained in the mass or holding it in the second temperature range;

(2) introducing and dispersing gas into the chocolate mass under the second temperature condition, followed by adding 1 to 3 % by weight of BOB seeding material or 0.5 to 1.5 % by weight of crystalline powdered BOB, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass within the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %,

or

[II] a process comprising the steps of:

(1) cooling a mixed oil of a melted edible oil or fat and tri-saturated fatty acid glycerides containing behenic acid to the range of 30 to 40 °C, mixing the mixed oil with a chocolate mass, and introducing and dispersing gas into the chocolate mass;

(2) thereafter, cooling the mass to the range of 30 to 36 °C and adding 1 to 3 % by weight of BOB seeding material or 0.5 to 1.5 % by weight of crystalline powdered BOB, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) cooling a mixed oil of a melted edible oil or fat and tri-saturated fatty acid glycerides containing behenic acid to the range of 30 to 40 °C, mixing the mixed oil with a chocolate mass, and then cooling the mass to the range of 30 to 36 °C;

(2) adding 1 to 3 % by weight of BOB seeding material or 0.5 to 1.5 % by weight of crystalline powdered BOB under said temperature condition, followed by introducing and dispersing gas into the chocolate mass, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) cooling a mixed oil of a melted edible oil or fat and tri-saturated fatty acid glycerides containing behenic acid to the range of 30 to 40 °C, mixing the mixed oil with a chocolate mass, and then cooling the mass to the range of 30 to 36 °C;

(2) introducing and dispersing gas into the chocolate mass, followed by adding 1 to 3 % by weight of BOB seeding material or 0.5 to 1.5 % by weight of crystalline powdered BOB under said temperature condition, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %.

## BEST MODE FOR CARRYING OUT THE INVENTION

Diglycerin fatty acid esters for use in the present invention can be exemplified by diglyceryl monostearate and diglyceryl monopalmitate, which can be used solely or in combination. The amount of the diglycerin fatty acid ester to be mixed is preferable 0.2 to 1.5 % by weight. If the amount of the diglycerin fatty acid ester to be mixed is less than 0.2 % by weight, then less sufficient effect of entrapping gas is exerted. At amounts of 1.5 % or higher by weight, on the other hand, it is not preferable from the viewpoint of taste, since one may become sensing the taste inherent in these emulsifying agents.

In addition, the present invention provides a process for manufacturing gas-entrapped chocolate mass characterized in that after a mixed oil of an edible oil or fat and tri-saturated fatty acid glycerides containing behenic acid is heated to melt crystals, the mixed oil is added to a chocolate mass and whipped at a state where tri-saturated fatty acid glycerides containing behenic acid are deposited by cooling. It is preferable that tri-saturated fatty acid glycerides are added so as to be in the range of 0.3 to 5 % by weight in the final chocolate mass. Addition at amounts larger than this range will increase the melting point of the fat too high. As a result, although whipping can be carried out, an increase in the viscosity of the chocolate mass during whipping is significant, and solidification may take place during whipping, depending on the temperature during whipping.

An edible oil or fat as used herein can be exemplified by, for example, plant oils and fats such as rapeseed oil, soybean oil, sunflower seed oil, cottonseed oil, peanut oil, rice bran oil, evening primrose oil, palm oil, shea butter, sal butter, cacao butter, coconut oil, palm seed oil, as well as modified oils and fats processed by their hydrogenation, fractionation, transesterification, and the like. These are preferably liquid at 20 °C. In adding a mixed oil of an edible oil or fat which is liquid at 20 °C and tri-saturated fatty acid glycerides containing behenic acid to a chocolate mass and whipping it, even if tri-saturated fatty acid glycerides containing behenic acid are in a crystal state, workability will be improved due to fluidity in a wide temperature range. Tri-saturated fatty acid glycerides containing behenic acid can be obtained, for example, generally by performing hydrogenation of an oil containing erucic acid, such that an iodine value of not more than 1 and a melting point of not less than 60 °C are achieved. As an oil containing 30 % by weight or more of erucic acid, for example, an erucic acid-rich rapeseed oil can be included. Preferable use is made mixing an edible oil or fat and tri-saturated fatty acid glycerides containing behenic acid to be used in the present invention at a ratio by weight of 85:15 to 95:5. If tri-saturated fatty acid glycerides containing behenic acid are used at higher ratios than this ratio, then not only the fluidity of the mixed oil becomes poor, resulting in difficult handling, but also whipping property tends to be worse, when mixing into a chocolate mass. On the other hand, if tri-saturated fatty acid glycerides containing behenic acid are used at lower ratios than this ratio, then whipping property tends to be worse, when mixing into a chocolate mass. It is preferable that a mixed oil of an edible oil or fat and tri-saturated fatty acid glycerides containing behenic acid is completely melted, and then the temperature of the mixed oil is cooled to the range of 30 to 45 °C and recrystallization is allowed to take place, after which the mixed fat prepared by cooling is used. The composition of cooled mixed fat is obtained which is formed by dispersing crystals of tri-saturated fatty acid glycerides containing behenic acid into a cooled mixed oil having a melting point lower than that of the crystals, and can be used suitably as an additive for allowing a chocolate mass to entrap gas. It is also necessary to whip a cooled mixed oil of an edible oil or fat and tri-saturated fatty acid glycerides containing behenic acid at such temperatures that crystals of tri-saturated fatty acid glycerides containing behenic acid are not dissolved. In particular, it is necessary that tri-saturated fatty acid glycerides containing behenic acid exist in crystal state, and thus tri-saturated fatty acid glycerides containing behenic acid do not interact with other oil and fat, for example, cocoa butter in a chocolate mass, so that the smooth melting of chocolate in the mouth is not impaired. When used in a completely melted state, not only the amount of crystals necessary for whipping is absent, resulting in no decrease in the specific gravity of the chocolate mass, but also tri-saturated fatty acid glycerides containing behenic acid interact with other oil and fat, for example, cocoa butter in a chocolate mass, resulting in an increase in the melting point of the total fat to increase heat resistance of the final chocolate and impair the smooth melting of the chocolate in the mouth. For these reasons, it is necessary to control the temperature of a chocolate mass in the range of 30 to 40 °C. Also, for a mixed oil of an edible oil or fat and tri-saturated fatty acid glycerides containing behenic acid, the temperature is similarly controlled, and they are mixed and whipped.

Crystalline powdered BOB in the present invention means a substance forming nuclei for the crystallization of the oil and fat in the chocolate mass. The amount of BOB seeding material or crystalline powdered BOB to be mixed is preferable 1 to 3 % by weight or 0.5 to 1.5 % by weight. If the amount of BOB seeding material to be used is less than 1 % by weight, or if the crystalline powdered BOB is less than 0.5 % by weight, then stable crystals are not developed in the chocolate mass. On the other hand, setting the amount above 3 % by weight for the BOB seeding material or above 1.5 % by weight for the crystalline powdered BOB is not preferable from the viewpoint of cost and taste.

In the present invention, the apparent specific gravity of an expanded chocolate after expansion and solidification within the hollow confectionery is controlled in the range of 0.14 to 0.30, and preferably in the range of 0.14 to 0.25. If the apparent specific gravity of an expanded chocolate is above 0.30, then it is not preferable from the viewpoint of taste, since the taste of the whole chocolate will become heavy. On the other hand, if the apparent specific gravity of an expanded chocolate is under 0.14, then the bubbles in the expanded chocolate are broken, and the gas and expanded chocolate are separated, so that the expanded chocolate is not obtained which has a continuous phase of the chocolate and good properties of taste.

Hollow confectionery for use in the present invention can be exemplified by snacks, biscuits, crackers and pretzels whose center portions are empty spaces. The hollow confectionery can be manufactured in accordance with processes described in WO 98/56258 and Japanese Patent H6-209711 (A) cited previously. That is, the hollow confectionery can be obtained by steps of forming dough of biscuits, crackers, pretzels or the like, into two-ply sheets and carrying out cutting, followed by subjecting the dough cuttings to an alkali treatment, and then baking the dough cuttings after or without water washing. Alternatively, the hollow confectionery can be obtained by steps of cooking a mixture of raw materials, with steam, such as grain flours to prepare a cooked dough, which is placed into a mixer to introduce air while stirring and form the cooked dough into sheets, two plies of which are piled to prepare die-cut dough pieces, and then drying the die-cut dough pieces to prepare dried, die-cut dough pieces having a specific gravity of 1.18 to 1.25, and then expanding the dried, die-cut dough by a heated-air treatment. Methods for filling a gas-entrapped chocolate mass into hollow confectionery can include a method by which filling is performed using hollow needles. The hollow volume of the hollow confectionery is preferably 10 to 100 ml. When the volume is less than 10 ml, a characteristic taste of the hollow confectionery containing an expanded chocolate according to the present invention cannot be recognized well. On the other hand, when the hollow volume is above 100 ml, it is not preferable, since the dimension is too large and it is difficult to eat.

In the present invention, a gas-entrapped chocolate mass can be obtained by adding to a chocolate mass which is prepared by mixing cacao mass, cocoa, cacao butter, cacao butter equivalent, saccharides, emulsifying agents such as lecithins, powdered milks, and the like, as appropriate, and carrying out refining' and conching treatments to prepare a chocolate mass, and adding thereto either a diglycerin fatty acid ester at a percentage of 0.2 to 1.5 % by weight in a case where a diglycerin fatty acid ester is used, or when a mixed oil of an edible oil or fat and tri-saturated fatty acid glycerides containing behenic acid is added to the chocolate mass, tri-saturated fatty acid glycerides at a final percentage of 0.3 to 5 % by weight of the chocolate mass, and thereafter carrying out a gas-entrapping treatment.

In this context, "a gas-entrapping treatment" means to the introduction and dispersion of gas into a chocolate mass while stirring under a raised or normal pressure the chocolate mass to which a diglycerin fatty acid ester or a mixed oil of an edible oil or fat and tri-saturated fatty acid glycerides containing behenic acid is added. As gas for use in this treatment can be exemplified air, nitrogen, carbon dioxide, helium, argon, while nitrogen gas is preferable. The gas-entrapping treatment is carried out, appropriately selectively, in a condition that a chocolate mass is melted at a temperature which is 0 to 12 °C higher than the melting point of the fat contained in the mass in a case where a diglycerin fatty acid ester has been added, or in a condition of a temperature within the range of 30 to 40 °C in a case where a mixed oil of an edible oil or fat and tri-saturated fatty acid glycerides containing behenic acid has been added to the chocolate mass. In a case where a diglycerin fatty acid ester has been added, the gas-entrapping treatment can be also carried out while cooling the mass to a temperature within the range which is 0 to 3 °C higher than the melting point of the fat contained in the mass or maintaining it within said temperature range, or alternatively carried out after adding BOB seeding material or crystalline powdered BOB under a temperature condition which is 0 to 3 °C higher than the melting point of the fat contained in the mass, such that the gas-entrapping treatment results in a specific gravity of the gas-entrapped chocolate mass of 0.80 to 1.00. When the temperature of a chocolate mass before the gas-entrapping treatment, which contains a diglycerin fatty acid ester or a mixed oil of an edible oil or fat and tri-saturated fatty acid glycerides containing behenic acid, is first adjusted within the range which is 0 to 12 °C higher than the melting point of the oil or fat contained in the chocolate mass, the introduction and dispersion of gas will be facilitated, allowing fine bubbles to be dispersed into the chocolate mass. On the other hand, when the temperature of a chocolate mass before the gas-entrapping treatment, to which a diglycerin fatty acid ester or a mixed oil of an edible oil or fat and tri-saturated fatty acid glycerides containing behenic acid is added, reaches a higher temperature, by 12°C or more, than the melting point of the fat contained therein, sufficient dispersion of gas cannot be achieved, since the emulsified state of the chocolate mass becomes unstable. In a case where a mixed oil of an edible oil or fat and tri-saturated fatty acid glycerides containing behenic acid has been added to a chocolate mass, the gas-entrapping treatment can also be carried out after adding BOB seeding material or crystalline powdered BOB in a temperature within the range of 30 to 36 °C, such that the gas-entrapping treatment results in a specific gravity of the gas-entrapped chocolate mass of 0.80 to 1.00. A temperature above 36 °C allows the crystals of the fat in the chocolate mass to completely melt and causes blooming, while a temperature under 30 °C allows the viscosity to increase, so that subsequent processing will be impaired.

It is desirable that the specific gravity of the gas-entrapped chocolate mass containing gas in the form of fine bubbles is from 0.80 to 1.00. When the specific gravity is more than 1.00, the bubbles contained in the gas-entrapped chocolate mass cooled under a reduced pressure at a subsequent step becomes coarse, resulting in poor properties of taste. When the specific gravity of the gas-entrapped chocolate mass is less than 0.80, an increase in the viscosity takes place, consequently, when hollow confectionery is filled therewith, it becomes difficult to inject the mass into the hollow confectionery using hollow needles having an inside diameter of 2 to 3 mm.

The addition of BOB seeding material or crystalline powdered BOB can be carried out before or after the gas-entrapping treatment.

The above-described steps according to the present invention make it possible to inject a gas-entrapped chocolate mass having a specific gravity of not more than 1.00, while keeping its low viscosity, into the hollow portion of hollow confectionery through needles having an inside diameter of 2 to 3 mm at a temperature within the range which is 0 to 3 °C higher than the melting point of the fat contained in the chocolate mass in a case where a diglycerin fatty acid ester is added, or in the temperature range of 30 to 36 °C in a case where a mixed oil of an edible oil or fat and tri-saturated fatty acid glycerides containing behenic acid is added to the chocolate mass.

In addition, it is possible to carry out expansion, followed by cooling and solidification of a chocolate mass with ease at the subsequent step, without subjecting the chocolate mass to tempering, by adding BOB seeding material or crystalline powdered BOB to the chocolate mass at a temperature within the range which is 0 to 3 °C higher than the melting point of the fat contained in the chocolate mass in a case where a diglycerin fatty acid ester is added, or in the temperature range of 30 to 36 °C in a case where a mixed oil of an edible oil or fat and tri-saturated fatty acid glycerides containing behenic acid is added to the chocolate mass.

In a case where the temperature of the fat in the chocolate mass, which has BOB seeding material or crystalline powdered BOB, and a diglycerin fatty acid ester, or a mixed oil of an edible oil or fat and tri-saturated fatty acid glycerides containing behenic acid is lower than the melting point of the fat in the chocolate mass, crystallization of the fat takes place during processing, resulting in an increase in the viscosity of the chocolate mass, and so that it is difficult to inject the mass into the hollow portion of hollow confectionery through needles having an inside diameter of 2 to 3 mm. Additionally in that case, a desirable expansion coefficient is not achievable upon a reduced-pressure treatment at the subsequent step, and desirable expanded chocolate having an apparent specific gravity of 0.14 to 0.30 cannot be obtained by cooling and solidifying. On the other hand, when the temperature of the gas-entrapped chocolate mass to which a diglycerin fatty acid ester is added exceeds a temperature that is 3 °C higher than the melting point of the fat contained in the chocolate mass, it becomes difficult that BOB seeding material or crystalline powdered BOB as seeding nuclei exerts effects as crystallizing nuclei of a chocolate mass. When the temperature of the gas-entrapped chocolate mass to which a diglycerin fatty acid ester or a mixed oil of an edible oil or fat and tri-saturated fatty acid glycerides containing behenic acid is added exceeds 36 °C, it also becomes difficult that BOB seeding material or crystalline powdered BOB as seeding nuclei exerts effects as crystallizing nuclei of a chocolate mass.

At the next step, hollow confectionery filled with the gas-entrapped chocolate mass containing BOB seeding material or crystalline powdered BOB is placed under a reduced pressure of 6000 to 12000 Pa, allowing the gas-entrapped chocolate mass to be expanded at a high expansion coefficient, and while maintaining such a state, allowing the temperature of the product to be cooled to 20 to 30 °C and solidified, thereby obtaining hollow confectionery filled, at a filling factor of not less than 80 %, with an expanded chocolate having an apparent specific gravity of 0.14 to 0.30.

In the present invention, the filling factor is expressed by the following equation:

$$\text{filling factor} = [\text{expanded chocolate volume}] / [\text{hollow volume of hollow confectionery}] \times 100$$

wherein the expanded chocolate volume refers to a volume measured under the conditions when a gas-entrapped chocolate mass is expanded in a chamber, i.e. under a reduced pressure and cooling.

It is preferable that the reduced pressure for expanding a gas-entrapped chocolate mass having a specific gravity of 0.80 to 1.00 is within the range of 6000 to 12000 Pa. A reduced pressure higher than 12000 Pa significantly decreases the expansion coefficient of a chocolate, while a reduced pressure lower than 6000 Pa allows the bubbles to be broken in a chocolate to separate the gas from the expanded chocolate. Thus in such cases, an expanded chocolate having a continuous phase of chocolate and good properties of taste is not obtained.

Manufacturing Example 1

A melted chocolate mass was obtained by mixing, as raw materials, 20 parts by weight of cacao mass, 20 parts by weight of whole milk powder, 40 parts by weight of sugar, 20 parts by weight of cocoa butter, and 0.4 parts by weight of lecithin in an ordinary preparation method, followed by refining and conching treatments. Then, 10 parts by weight of a mixture obtained by melting 9 parts by weight of cocoa butter equivalent and 1 part by weight of diglyceryl monostearate was added to 90 parts by weight of the above-described chocolate mass to produce the chocolate mass having a melting point of the fat of 33 °C. The chocolate mass was then kept at a temperature of 45 °C. Stirring was conducted using a continuous cooling, gas-entrapping apparatus equipped with a cooling function (MONDOMIX HOWDEN®, Type A-05, manufactured by MONDOMIX B.V.), while cooling the temperature of the mass down to 36 °C, while nitrogen gas was introduced and dispersed, thereby obtaining a gas-entrapped chocolate mass. This gas-entrapped chocolate mass had a specific gravity of 0.90. To 100 parts by weight of this gas-entrapped chocolate mass was added 3 parts by weight of BOB seeding material and mixed. The viscosity of the gas-entrapped chocolate mass into which the BOB seeding material was dispersed was 15 Pa·s, when measured at 35 °C and at 4 r.p.m. using No. 6 rotor of a B-type viscometer (manufactured by Tokyo Keiki Co., Ltd.). Twelve grams of the gas-entrapped chocolate mass was injected into the hollow portion of a hollow confectionery composed of a pretzel dough and having a hollow volume of 48 ml using a hollow needle having an inside diameter of 2.5 mm. The above-described hollow confectionery composed of a pretzel dough was manufactured in a modification of the method described in WO 98/56258. That is, a pretzel dough having wheat flour as the major raw material was formed into two-ply sheets using a sheet forming machine, and then cut using a roller cutter. After that, the dough pieces were applied to an alkali treatment for 5 seconds in an alkali bath containing a sodium hydroxide solution with pH 11.50 at 80 °C, followed by baking them in a continuous wire-mesh oven, to manufacture a hollow confectionery composed of the pretzel. The above-described hollow confectionery injected with the gas-entrapped chocolate mass as previously described was placed in a pressure-reduced container having an ambient temperature of 10 °C, and allowed to be cooled down to 23 °C under a reduced pressure of 9310 Pa. In this way, a hollow confectionery filled with an expanded chocolate having an apparent specific gravity of 0.25 was obtained by solidifying the gas-entrapped chocolate mass in the hollow confectionery while expanding it. The filling factor was 100 % in this case.

Comparative Manufacturing Example 1

A chocolate mass having a melting point of the fat of 33 °C was obtained by mixing, as the raw materials, 18 parts by weight of cacao mass, 18 parts by weight of whole milk powder, 36 parts by weight of sugar, 18 parts by weight of cocoa butter, 10 parts by weight of cocoa butter equivalent, and 0.4 parts by weight of lecithin in an ordinary producing method, followed by refining and conching treatments. The chocolate mass was subjected to a tempering treatment. The chocolate mass whose temperature was controlled to 30 °C was cooled down to 28 °C, using a continuous cooling, gas-entrapping apparatus (MONDOMIX HOWDEN®, Type A-05, manufactured by MONDOMIX B.V.), and nitrogen gas was introduced and dispersed while stirring, thereby obtaining a gas-entrapped chocolate mass.

This gas-entrapped chocolate mass had a specific gravity of 0.90. The viscosity was 55 Pa•s, when measured by a similar method as in Example 1. Twelve grams of the gas-entrapped chocolate mass was injected into the hollow portion of a hollow confectionery manufactured by a similar method as in Example 1 and having a hollow volume of 48 ml, using a hollow needle having an inside diameter of 4 mm. After that, the injected, gas-entrapped chocolate mass was expanded, and cooled and solidified by a method according to Example 1. In this way, a hollow pretzel confectionery filled with an expanded chocolate having an apparent specific gravity of 0.40 was obtained. The filling factor was 62 % in this case.

Comparative Testing Example 1

Property and sensory testing was carried out with hollow confectionery containing an expanded chocolate obtained by the method described in Manufacturing Example 1 and Comparative Manufacturing Example 1. Testing was performed as follows. Results are shown below in Table 1.

The evaluation of a texture on eating was conducted by 15 professional panelists according to the following criteria:

Score 5: there is felt no gap between a crisp texture of the solidified chocolate and a texture on eating the hollow confectionery;
Score 4: there is felt an insignificant difference between a crisp texture of the solidified chocolate and a texture on eating the hollow confectionery;
Score 3: there is felt a difference between a crisp texture of the solidified chocolate and a texture on eating the hollow confectionery;
Score 2: there is felt a gap between a crisp texture of the solidified chocolate and a texture on eating the hollow confectionery; and
Score 1: there is felt a clear gap between a crisp texture of the solidified chocolate and a texture on eating the hollow confectionery, and an extensive hardness in the solidified chocolate portion.

The hardness (N) of a solidified chocolate portion is represented by a maximum stress under the conditions of a 3-mm probe, a velocity of moving the probe of 30 mm/min., using a rheometer (Type NRM-2002, manufactured by Fudoh Kagaku Co., Ltd.).

Table 1

| Description | Manufacturing Example 1 | Comparative Manufacturing Example 1 |
|---|---|---|
| Solidified chocolate portion Apparent specific gravity Hardness Filling factor Injection rate | 0.25 1.96 N 100 % 2 see./12 g (using a 2.5 mm ID needle) | 0.40 3.92 N 62 % 30 sec./12 g (using a 2.5 mm ID needle), 5 sec./12 g (using a 4 mm ID needle) |
| Sensory test | Evaluation score: 5 Crisp and light eating-texture. Mild taste. Smooth melting in the mouth. | Evaluation score: 2 Slight hardness and heavy eating-texture in the solidified chocolate portion. Heavy aftertaste when eating the all amount (12g). |
| Visual inspection | The diameter at the injected hole was 3 mm or less with being unnoticeable. | The diameter at the injected hole was 5 mm or more, and unacceptable feeling in the mouth. |

Manufacturing Example 2

A chocolate mass was obtained which contained cocoa butter equivalent and diglyceryl monostearate and had a melting point of the fat of 33 °C, according to the method described in Manufacturing Example 1. The chocolate mass was cooled until the temperature reached 36 °C, using a continuous heat-exchanger equipped with a cooling function (B-type ONLATOR®, manufactured by Sakura Seisakusho Ltd.), and then 3 parts by weight of BOB seeding material was added to 100 parts by weight of the chocolate mass to prepare a chocolate mass containing BOB seeding material. With maintaining the mass temperature at 36 °C, stirring was conducted using a continuous cooling, gas-entrapping apparatus (MONDOMIX HOWDEN®, Type A-05, manufactured by MONDOMIX B.V.), and nitrogen gas was introduced and dispersed, thereby obtaining a gas-entrapped chocolate mass. This gas-entrapped chocolate mass had a specific gravity of 0.90. The viscosity of the gas-entrapped milk chocolate mass into which the BOB seeding material was dispersed was 15 Pa•s, when measured at 35 °C and at 4 r.p.m. using No. 6 rotor of a B-type viscometer (Tokyo Keiki Co., Ltd.). Twelve grams of the gas-entrapped milk chocolate mass was injected into the hollow portion of a hollow pretzel confectionery having a hollow volume of 48 ml using a hollow needle having an inside diameter of 2.5 mm. The above-described hollow pretzel confectionery was manufactured in a modification of the method described in WO 98/56258. The hollow confectionery injected with the gas-entrapped chocolate mass was placed in a pressure-reduced container having an ambient temperature of 10°C, and allowed to be cooled down to 23 °C under a reduced pressure of 9310 Pa. In this way, a hollow confectionery filled with an expanded chocolate having an apparent specific gravity of 0.25 was obtained by expanding the gas-entrapped chocolate mass under a reduced pressure and solidifying it by cooling. The filling factor was 100 % in this case.

Manufacturing Example 3

A chocolate mass was obtained which contained cocoa butter equivalent and diglyceryl monostearate and had a melting point of the fat of 33 °C, according to the method described in Manufacturing Example 1. The temperature of the chocolate mass was adjusted at 45 °C. Stirring was conducted using a continuous cooling, gas-entrapping apparatus equipped with a cooling function (MONDOMIX HOWDEN®, Type A-05, manufactured by MONDOMIX B. V.), while cooling the temperature of the chocolate mass down to 35 °C, and nitrogen gas was introduced and dispersed, thereby obtaining a gas-entrapped chocolate mass having a specific gravity of 0.85. To 100 parts by weight of the gas-entrapped chocolate mass was added 2.5 parts by weight of BOB seeding material and dispersed to obtain a gas-entrapped chocolate mass. 5.6 grams of this gas-entrapped chocolate mass was injected into a hollow confectionery composed of a biscuit having a hollow volume of 40 ml using a hollow needle having an inside diameter of 2.5 mm. The hollow confectionery composed of a biscuit was manufactured in accordance with the method described in WO 98/56258. After that, the above-described hollow biscuit confectionery filled with the gas-entrapped chocolate mass was cooled down to 22 °C under a reduce pressure of 6650 Pa. The apparent specific gravity of the chocolate portion in the hollow biscuit confectionery containing an expanded chocolate obtained in this way was 0.14, and the filling factor was 100 % in this case.

The hollow biscuit confectionery containing an expanded chocolate obtained in this Example displayed a light eating-texture and had good properties of taste.

Manufacturing Example 4

A melted chocolate mass was obtained by mixing, as the raw materials, 20 parts by weight of cacao mass, 20 parts by weight of whole milk powder, 40 parts by weight of sugar, 20 parts by weight of cocoa butter, and 0.4 parts by weight of lecithin in an ordinary producing method, followed by refining and conching treatments. Then, 10 parts by weight of a mixture obtained by melting 9 parts by weight of cocoa butter equivalent and 1 part by weight of diglyceryl monostearate was added to 90 parts by weight of the above-described chocolate mass to produce a chocolate mass having a melting point of the fat of 33 °C. With maintaining the chocolate mass at 45 °C, stirring was conducted using a continuous cooling, gas-entrapping apparatus equipped with a cooling function (MONDOMIX HOWDEN®, Type A-05, manufactured by MONDOMIX B.V.), while cooling the temperature of the chocolate mass down to 36 °C, and nitrogen gas was introduced and dispersed to obtain a gas-entrapped chocolate mass. This gas-entrapped chocolate mass had a specific gravity of 0.90. To 100 parts by weight of this gas-entrapped chocolate mass was added 1.5 parts by weight of crystalline powdered BOB and mixed. The viscosity of the gas-entrapped chocolate mass into which the crystalline powdered BOB was dispersed was 15 Pa·s, when measured at 35 °C and at 4 r.p.m. using No. 6 rotor of a B-type viscometer (Tokyo Keiki Co., Ltd.). Twelve grams of the gas-entrapped chocolate mass was injected into the hollow portion of a hollow confectionery composed of a pretzel and having a hollow volume of 48 ml, using a hollow needle having an inside diameter of 2.5 mm. The above-described hollow confectionery composed of a pretzel was manufactured in a modification of the method described in WO 98/56258. That is, a pretzel dough having wheat flour as the major raw material was formed into two-ply sheets using a sheet forming machine, and then cut using a roller cutter. After that, the dough pieces were applied to an alkali treatment for 5 seconds in an alkali bath containing a sodium hydroxide solution with pH 11.50 at 80 °C, followed by baking them in a continuous wire-mesh oven, to manufacture a hollow confectionery composed of the pretzel. The above-described hollow confectionery injected with the gas-entrapped chocolate mass as previously described was placed in a pressure-reduced container having an ambient temperature of 10 °C, and allowed to be cooled down to 23 °C under a reduced pressure of 9310 Pa. In this way, a hollow confectionery filled with an expanded chocolate having an apparent specific gravity of 0.25 was obtained by solidifying the gas-entrapped chocolate mass in the hollow confectionery while expanding it. The filling factor was 100 % in this case.

Manufacturing Example 5

A melted chocolate mass was obtained by mixing, as the raw materials, 20 parts by weight of cacao mass, 20 parts by weight of whole milk powder, 40 parts by weight of sugar, 20 parts by weight of cocoa butter, and 0.4 parts by weight of lecithin in an ordinary producing method, followed by refining and conching treatments. The chocolate mass was maintained at 35 °C, and to 90 parts by weight of the mass was added 3 parts by weight of a mixed oil of an edible oil and tri-saturated fatty acid glycerides containing behenic acid, followed by mixing 7 parts by weight of cocoa butter equivalent (Oleo A7, manufactured by Fuji Oil Co., Ltd.) whose temperature was adjusted at 35 °C. While maintaining the temperature at 35 °C, stirring was conducted using a continuous cooling, gas-entrapping apparatus equipped with a cooling function (MONDOMIX HOWDEN®, Type A-05, manufactured by MONDOMIX B.V.), and nitrogen gas was introduced and dispersed, thereby obtaining a gas-entrapped chocolate mass. This gas-entrapped chocolate mass had an apparent specific gravity of 0.90. To 100 parts by weight of the gas-entrapped chocolate mass was added 1.5 parts by weight of crystalline powdered BOB and dispersed. The viscosity of the gas-entrapped chocolate mass was 20 Pa•s, when measured at 35 °C and at 4 r.p.m., using No. 6 rotor of a B-type viscometer (Tokyo Keiki Co., Ltd.). Four grams of the gas-entrapped chocolate mass was injected into the hollow portion of a hollow confectionery composed of a pretzel and having a hollow volume of 16 ml using a hollow needle having an inside diameter of 2.5 mm. The hollow confectionery composed of a pretzel was manufactured in a modification of the method described in WO 98/56258. That is, a pretzel dough having wheat flour as the major raw material was formed into two-ply sheets using a sheet forming machine, and then cut using a roller cutter. After that, the dough pieces were applied to an alkali treatment for 5 seconds in an alkali bath containing a sodium hydroxide solution with pH 11.50 at 80 °C, followed by baking them on a continuous wire-mesh oven, to manufacture a hollow confectionery composed of the pretzel. The above-described hollow confectionery injected with the gas-entrapped milk chocolate mass as previously described was placed in a pressure-reduced container having an ambient temperature of 10 °C, and allowed to be cooled down to 23 °C under a reduced pressure of 9310 Pa. In this way, a hollow confectionery filled with an expanded chocolate having an apparent specific gravity of 0.25 was obtained by solidifying the gas-entrapped chocolate mass in the hollow confectionery while expanding it. The filling factor was 100 % in this case.

The mixed oil of an edible oil and tri-saturated fatty acid glycerides containing behenic acid comprises 90 parts by weight of a slightly hydrogenated oil (having an iodine value of 95) of erucic acid-poor rapeseed oil and 10 parts by weight of an extremely hydrogenated fat (having an iodine value of not more than 1 and a melting point of 62 °C) of erucic acid-rich rapeseed oil. The above-described mixed oil attains to be completely melted at 80 °C, and then to be cooled down to 40 °C in a water bath at 15 °C to be recrystallized tri-saturated fatty acid glycerides containing behenic acid, and is thereafter stored in this condition at 20 °C. The above-mentioned mixed oil is also applied to the manufacturing examples 6 and 7 below.

Manufacturing Example 6

A melted chocolate mass was obtained according to the method described in Example 5. The chocolate mass was maintained at 35 °C, and to 90 parts by weight of the mass was added 3 parts by weight of a mixed oil of an edible oil and tri-saturated fatty acid glycerides containing behenic acid, followed by mixing 7 parts by weight of cocoa butter equivalent (Oleo A7, manufactured by Fuji Oil Co., Ltd.) whose temperature was adjusted at 35 °C. In this way, a chocolate mass was obtained which contained cocoa butter equivalent and a mixed oil of an edible oil and tri-saturated fatty acid glycerides containing behenic acid. After the chocolate mass was cooled down to a temperature of 35 °C using a continuous heat-exchanger equipped with a cooling function (B-type ONLATOR®, manufactured by Sakura Seisakusho Ltd.), to 100 parts by weight of the chocolate mass was added 3 parts by weight of BOB seeding material, thereby obtaining a chocolate mass containing BOB seeding material. While maintaining the mass temperature at 35 °C, stirring was conducted using a continuous cooling, gas-entrapping apparatus (MONDOMIX HOWDEN®, Type A-05, manufactured by MONDOMIX B.V.), and nitrogen gas was introduced and dispersed, thereby obtaining a gas-entrapped chocolate mass. This gas-entrapped chocolate mass had a specific gravity of 0.90. The viscosity of the gas-entrapped chocolate mass into which the BOB seeding material was dispersed was 15 Pa•s, when measured at 35 °C and at 4 r.p.m. using No. 6 rotor of a B-type viscometer (Tokyo Keiki Co., Ltd.). Twelve grams of the gas-entrapped chocolate mass was injected into the hollow portion of a hollow pretzel confectionery having a hollow volume of 48 ml using a hollow needle having an inside diameter of 2.5 mm. The hollow pretzel confectionery was manufactured in a modification of the method described in WO 98/56258. The hollow confectionery injected with the gas-entrapped chocolate mass was placed in a pressure-reduced container having an ambient temperature of 10 °C, and allowed to be cooled down to 23 °C under a reduced pressure of 9310 Pa. In this way, a hollow confectionery filled with an expanded chocolate having an apparent specific gravity of 0.25 was obtained by expanding the gas-entrapped chocolate mass under a reduced pressure and solidifying it by cooling. The filling factor was 100 % in this case.

Manufacturing Example 7

A melted chocolate mass was obtained according to the method described in Example 5. The chocolate mass was maintained at 35 °C, and to 90 parts by weight of the mass was added 3 parts by weight of a mixed oil of an edible oil and tri-saturated fatty acid glycerides containing behenic acid, followed by mixing 7 parts by weight of cocoa butter equivalent (Oleo A7, manufactured by Fuji Oil Co., Ltd.) whose temperature was adjusted at 35 °C. In this way, a chocolate mass was obtained which contained cocoa butter equivalent and a mixed oil of an edible oil and tri-saturated fatty acid glycerides containing behenic acid.

While maintaining the mass temperature at 35 °C, stirring was conducted using a continuous cooling, gas-entrapping apparatus equipped with a cooling function (MONDOMIX HOWDEN®, Type A-05, manufactured by MONDOMIX B.V.), and nitrogen gas was introduced and dispersed, thereby obtaining 'a gas-entrapped chocolate mass having a specific gravity of 0.85. To 100 parts by weight of the gas-entrapped chocolate mass was added 2.5 parts by weight of BOB seeding material and dispersed to obtain a gas-entrapped chocolate mass. 5.6 grams of the gas-entrapped chocolate mass was injected into the hollow portion of a hollow confectionery composed of a biscuit and having a hollow volume of 40 ml using a hollow needle having an inside diameter of 2.5 mm. The hollow confectionery composed of a biscuit was manufactured in accordance with the method described in WO 98/56258. After that, the above-described hollow biscuit confectionery injected with the gas-entrapped chocolate mass was cooled down to 22 °C under a reduced pressure of 6650 Pa. The apparent specific gravity of the chocolate portion in the hollow biscuit confectionery containing an expanded chocolate obtained in this way was 0.14, and the filling factor was 100 % in this case.

The hollow biscuit confectionery containing an expanded chocolate obtained in this manufacturing example displayed a light eating-texture and had good properties of taste.

## INDUSTRIAL APPLICABILITY

According to the present invention, processes for manufacturing a relatively large-sized and hollow confectionery containing an expanded chocolate are established which has a very light eating-texture, and said hollow confectionery can be provided by the processes.

**Claims**

1. Hollow confectionery containing an expanded chocolate, comprising a gas-entrapped chocolate mass and hollow confectionery filled with the gas-entrapped chocolate mass, said mass containing 0.2 to 1.5 % by weight of a diglycerin fatty acid ester and. 1 to 3 % by weight of BOB seeding material or 0.5 to 1.5 % by weight of crystalline powdered BOB, and in that the expanded chocolate obtained by expanding and solidifying the gas-entrapped chocolate mass contained in the hollow confectionery has an apparent specific gravity adjusted in the range of 0.14 to 0.30.

2. Hollow confectionery containing an expanded chocolate according to claim 1, wherein the diglycerin fatty acid ester is diglyceryl monostearate or diglyceryl monopalmitate.

3. Hollow confectionery containing an expanded chocolate according to claim 1 or 2, wherein the hollow confectionery has a hollow volume of 10 to 100 ml.

4. A process for manufacturing hollow confectionery containing an expanded chocolate, comprising the steps of:

    (1) melting a chocolate mass containing 0.2 to 1.5 % by weight of a diglycerin fatty acid ester in a first temperature range which is 0 to 12 °C higher than the melting point of the fat contained in the chocolate mass, and introducing and dispersing gas into the chocolate mass;
    (2) thereafter, adding 1 to 3 % by weight of BOB seeding material or 0.5 to 1.5 % by weight of crystalline powdered BOB, while cooling the mass to a second temperature range which is 0 to 3 °C higher than the melting point of the fat contained in the mass or holding it in the second temperature range, thereby obtaining a gas-entrapped chocolate mass having a specific gravity of 0.80 to 1.00;
    (3) filling the gas-entrapped chocolate mass into hollow confectionery having a hollow volume of 10 to 100 ml; and
    (4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

    or alternatively,

    (1) melting a chocolate mass containing 0.2 to 1.5 % by weight of a diglycerin fatty acid ester in a first temperature range which is 0 to 12 °C higher than the melting point of the fat contained in the chocolate mass, and then cooling the mass to a second temperature range which is 0 to 3 °C higher than the melting point of the fat contained in the mass or holding it in the second temperature range;
    (2) adding 1 to 3 % by weight of BOB seeding material or 0.5 to 1.5 % by weight of crystalline powdered BOB under the second temperature condition, followed by introducing and dispersing gas into the chocolate mass, thereby obtaining a gas-entrapped chocolate mass having a specific gravity of 0.80 to 1.00;
    (3) filling the gas-entrapped chocolate mass into hollow confectionery having a hollow volume of 10 to 100 ml; and
    (4) processing the hollow confectionery filled with the gas-entrapped chocolate mass under conditions at a reduced pressure of 6000 to 12000 Pa, followed by expanding and cooling the gas-entrapped chocolate mass within the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

    or alternatively,

    (1) melting a chocolate mass containing 0.2 to 1.5 % by weight of a diglycerin fatty acid ester in a first temperature range which is 0 to 12 °C higher than the melting point of the fat contained in the chocolate mass, and then cooling the mass to a second temperature range which is 0 to 3 °C higher than the melting point of the fat contained in the mass or holding it in the second temperature range;
    (2) introducing and dispersing gas into the chocolate mass under the second temperature condition, followed by adding 1 to 3 % by weight of BOB seeding material or 0.5 to 1.5 % by weight of crystalline powdered BOB, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass within the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %.

5. A process for manufacturing hollow confectionery containing an expanded chocolate according to claim 4, wherein the diglycerin fatty acid ester is diglyceryl monostearate or diglyceryl monopalmitate.

6. A process for manufacturing hollow confectionery containing an expanded chocolate according to claim 4 or 5, wherein the gas introduced and dispersed into the chocolate mass is nitrogen gas.

7. Hollow confectionery containing an expanded chocolate, comprising a gas-entrapped chocolate mass and hollow confectionery filled with the gas-entrapped chocolate mass, said mass containing a mixed oil of an edible oil or fat and tri-saturated fatty acid glycerides containing behenic acid and 1 to 3 % by weight of BOB seeding material or 0.5 to 1.5 % by weight of crystalline powdered BOB, and in that the expanded chocolate obtained by expanding and solidifying the gas-entrapped chocolate mass contained in the hollow confectionery has an apparent specific gravity adjusted in the range of 0.14 to 0.30.

8. Hollow confectionery containing an expanded chocolate according to claim 7, wherein tri-saturated fatty acid glycerides containing behenic acid are an extremely hydrogenated fat of erucic acid-rich rapeseed oil.

9. Hollow confectionery containing an expanded chocolate according to claim 7 or 8, wherein tri-saturated fatty acid glycerides containing behenic acid have a content of erucic acid-rich rapeseed oil of 0.3 to 5 % by weight, relative to the whole weight of the gas-entrapped chocolate.

10. A process for manufacturing hollow confectionery containing an expanded chocolate, comprising the steps of:

(1) cooling a mixed oil of a melted edible oil or fat and tri-saturated fatty acid glycerides containing behenic acid to the range of 30 to 40 °C, mixing the mixed oil with a chocolate mass, and introducing and dispersing gas into the chocolate mass;

(2) thereafter, cooling the mass to the range of 30 to 36 °C and adding 1 to 3 % by weight of BOB seeding material or 0.5 to 1.5 % by weight of crystalline powdered BOB, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) cooling a mixed oil of a melted edible oil or fat and tri-saturated fatty acid glycerides containing behenic acid to the range of 30 to 40 °C, mixing the mixed oil with a chocolate mass, and then cooling the mass to the range of 30 to 36 °C;

(2) adding 1 to 3 % by weight of BOB seeding material or 0.5 to 1.5 % by weight of crystalline powdered BOB under said temperature condition, followed by introducing and dispersing gas into the chocolate mass, thereby obtaining a gas-entrapped chocolate mass having a specific gravity of 0.80 to 1.00;

(3) filling the gas-entrapped chocolate mass into hollow confectionery having a hollow volume of 10 to 100 ml; and

(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %;

or alternatively,

(1) cooling a mixed oil of a melted edible oil or fat and tri-saturated fatty acid glycerides containing behenic acid to the range of 30 to 40 °C, mixing the mixed oil with a chocolate mass, and then cooling the mass to the range of 30 to 36 °C;
(2) introducing and dispersing gas into the chocolate mass, followed by adding 1 to 3 % by weight of BOB seeding material or 0.5 to 1.5 % by weight of crystalline powdered BOB under said temperature condition, thereby obtaining a gas-entrapped chocolate mass having a specific gravity of 0.80 to 1.00;
(3) filling the gas-entrapped chocolate mass into hollow confectionery having a hollow volume of 10 to 100 ml; and
(4) processing the hollow confectionery filled with the gas-entrapped chocolate mass under conditions at a reduced pressure of 6000 to 12000 Pa, followed by expanding and cooling the gas-entrapped chocolate mass in the hollow confectionery, thereby controlling the apparent specific gravity of the expanded chocolate in the range of 0.14 to 0.30 and the filling factor of the expanded chocolate in the hollow portion in the hollow confectionery in the range of 80 to 100 %.

11. A process for manufacturing hollow confectionery containing an expanded chocolate according to claim 10, wherein tri-saturated fatty acid glycerides containing behenic acid are an extremely hydrogenated oil of erucic acid-rich rapeseed oil.

12. A process for manufacturing hollow confectionery containing an expanded chocolate according to claim 10 or 11, wherein tri-saturated fatty acid glycerides containing behenic acid have a content of erucic acid-rich rapeseed oil of 0.3 to 5 % by weight, relative to the whole weight of the gas-entrapped chocolate.

13. A process for manufacturing hollow confectionery containing an expanded chocolate according to any one of claims 10 to 12, wherein the gas introduced and dispersed into the chocolate mass is nitrogen gas.

## INTERNATIONAL SEARCH REPORT

| | International application No. |
|---|---|
| | PCT/JP01/05457 |

| A. CLASSIFICATION OF SUBJECT MATTER |
|---|
| Int.Cl$^7$ A23G1/00 |
| According to International Patent Classification (IPC) or to both national classification and IPC |

| B. FIELDS SEARCHED |
|---|
| Minimum documentation searched (classification system followed by classification symbols) <br> Int.Cl$^7$ A23G1/00 |
| Documentation searched other than minimum documentation to the extent that such documents are included in the fields searched |
| Electronic data base consulted during the international search (name of data base and, where practicable, search terms used) <br> WPI (DIALOG) |

| C. DOCUMENTS CONSIDERED TO BE RELEVANT | | |
|---|---|---|
| Category* | Citation of document, with indication, where appropriate, of the relevant passages | Relevant to claim No. |
| Y | JP 63-202341 A (Morinaga Seika K.K.), <br> 22 August, 1988 (22.08.88), <br> (Family: none) | 1-13 |
| Y | JP 9-37716 A (Kao Corporation), <br> 10 February, 1997 (10.02.97), <br> (Family: none) | 1-13 |
| Y | US 5505971 A (Meiji Seika Kaisha, Ltd.), <br> 09 April, 1996 (09.04.96), <br> & JP 6-209711 A & GB 2273433 A | 1-13 |
| P,Y | WO 00/57715 A1 (Fuji Oil Company, Limited), <br> 05 October, 2000 (05.10.00), <br> (Family: none) | 7-13 |
| A | JP 5-211842 A (Fuji Oil Company, Limited), <br> 24 August, 1993 (24.08.93), <br> (Family: none) | 1-13 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br> 30 July, 2001 (30.07.01) | Date of mailing of the international search report <br> 07 August, 2001 (07.08.01) |
|---|---|
| Name and mailing address of the ISA/ <br> Japanese Patent Office | Authorized officer |
| Facsimile No. | Telephone No. |

Form PCT/ISA/210 (second sheet) (July 1992)